Europäisches Patentamt

European Patent Office

Office européen des brevets

(19)

(11) Publication number: **0 271 611 B1**

# EUROPEAN PATENT SPECIFICATION

(45) Date of publication of patent specification: **27.11.91**  (51) Int. Cl.⁵: **H01B 3/04, H02K 44/06**

(21) Application number: **86202343.9**

(22) Date of filing: **19.12.86**

(54) Insulating material comprising heat treated mica and annular linear induction pump with an externally supported duct.

(43) Date of publication of application:
**22.06.88 Bulletin 88/25**

(45) Publication of the grant of the patent:
**27.11.91 Bulletin 91/48**

(84) Designated Contracting States:
**BE DE ES FR GB IT NL SE**

(56) References cited:
**EP-A- 0 131 061**
**US-A- 2 788 837**

(73) Proprietor: **THE DOW CHEMICAL COMPANY**
**2030 Dow Center Abbott Road P.O. Box 1967**
**Midland Michigan 48640-1967(US)**

(72) Inventor: **Behrens, Hugh C.**
**222 Behrens Street P.O. Box 77435-0876**
**East Bernard, Texas(US)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

Rank Xerox (UK) Business Services

## Description

The present invention resides in an annular linear induction pump which is capable of operation at a temperature in excess of 700° C without external cooling and which is capable of developing a hydrostatic head of molten metal, such as molten magnesium, in excess of 10 meters. The preferred design of the pump employs only six coils versus twelve or more coils that are presently used in pumps.

Electromagnetic pumps have been designed in which a single duct is oriented between the pole pieces of a magnet and current is induced in an electrically conducting fluid within the duct. The induced current flow is perpendicular to the magnetic flux from the magnet. This reaction to the flux causes a force to be exerted on the fluid perpendicular to both the current and the flux so that a pumping action takes place. Such pumps have no moving parts and are well suited for applications where leakage, such as the leakage encountered in conventional pumps, cannot be tolerated. Representative of such applications is the pumping of liquid metal coolant in fast breeder atomic reactors.

The fact that electromagnetic pumps can perform the function of a mechanical pump while having no bearings, or seals, or mechanical moving parts makes this type of pump extremely attractive for the conveyance of molten metals. While electromagnetic pumps have a relatively low efficiency (about 45%), which is little more than one-half of the value obtainable from a corresponding mechanical pump, the use of electromagnetic pumps for the conveyance of molten metals is essential to the safe operation of atomic reactors and their associated elements.

There are various types of electromagnetic pumps such as, for example, helical magnetic pumps, flat linear induction pumps, centrifugal electromagnetic pumps and annular linear induction pumps. Each of the various types of electromagnetic pump has a different configuration and a preferred application.

When pumps of the prior art are employed to pump molten metals which melt at a temperature much above molten sodium, they have a tendency to short out and, as a result, the prior art pumps have resorted to cooling the magnetic coils with inert fluids. Such cooling modifications have increased the size of the pump and necessitated sealing devices.

Conventional molten metal handling pumps, exemplified by those built by MHD Pump and Generators; were designed to operate in a low temperature closed loop systems. These pumps were not restricted by size and thus a twelve coil pump became the standard. When these pumps were tried for pumping molten metal in industrial applications, e.g. in pumping molten magnesium out of electrochemical cells, their size and configuration dictated that the pump be introduced to operate in the molten metal zone versus the underlying sludge and salt zones, in a horizontal fashion. This created certain problems and required the addition of an elbow to the pumps which restricted the freedom of insertion of the pump into the molten metal. In addition, with the pump laying on its side it was capable of drawing molten metal only as long as the central tube annulus is full of metal as otherwise the pump would not operate. In a magnesium cell for example any flux, salt bath or sludge accumulation entering the tube annulus would greatly reduce the conductivity inside of the inlet tube and the pump would cease to operate. Therefore, it was deemed essential to employ a vertical pump position. Thus, a six coil pump, as hereafter described was, built.

The preferred orientation of the pump inlet duct or tube is in the vertical direction so as to attain a self-priming and salt draining advantage upon placement of the pump into service and upon pump removal, respectively, as well as to provide a lower suction inlet for the molten metal. In industrial metal handling applications there arose the situation that the depth of molten magnesium was less than 30 cm and a twelve coil pump, whose housing was over 50 cm in length, if used in the vertical orientation was too tall. A six coil version of the pump in a housing less than 23 cm in length was fabricated for operation with a vertically oriented inlet duct. Tests unexpectedly revealed a performance superior to the twelve coil version, while extending the application of the six coil pump to shallow draft holding furnaces and to small melting pots or crucibles common to most die casting operations.A further embodiment to this small pump housing are suction inlet modifications (e.g. a horizontal deflection plate) that permitted low velocity flows of the molten metal to be concentrated in a horizontal plane so as not to disturb or draw from a sludge accumulation that typically exists beneath the molten metal.

The pump built in accordance with the present invention employs an improved high temperature resistant insulation in the coils and stator cores of the pump. The insulating material renders the pump capable of operating in the high temperature range profile of molten metals. While the disclosure hereinafter will make particular reference to magnesium, it is to be understood that other metals such as zinc, lithium and their alloys are pumpable using the pump of the present invention provided, that such metals or metal alloys do not exceed the melting temperature of the materials employed in the pump components.

A particular aspect of the invention resides in an insulation material which allows the operation of the pump of the present invention at the temperatures of metals which generally melt below the melting temperature of copper, i.e. below about 900°C. The insulation employed in the pump of the invention is a thermally pretreated mica which, after such treatment, does not fail at the temperature to which it is subjected during operation of the pump.

US-A-2788837 dicloses mica which has been thermally pretreated in an inert atmosphere. This citation advices against treating mica in an oxygen containing atmosphere at high temperatures

The metal composition of the magnetic core and the stator elements that is preferably employed in the invention is a cobalt/iron alloy. In the case where molten magnesium is pumped, the central tube and the exterior housing are made of a columbium stabilized nickel-alloy stainless steel. In those cases where it is undesirable to expose the magnesium to any nickel it is preferred to employ a chormium molybdinum containing steel such as AISI type 430 stainless steel.

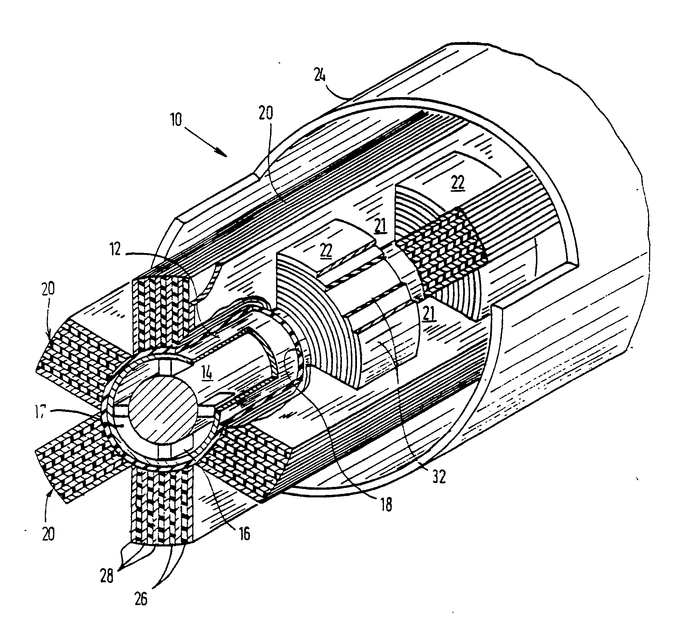

With particular reference to the Figure, there is illustrated, a substantially isometric, partial sectional view of the interior of a pump of the present invention. The pump is generally identified by reference number (10) and comprises an inner or central conduit or tube (12) for conveying molting metal therethrough. The inner tube (12) is connected to conduit(s) (not shown) for conveying molten metal from an electrochemical cell, melting pot or crucible to a casting machine, or the like. The inner tube (12) is provided with a central core (14) having a plurality of guide vanes (16) mounted at circumferentially spaced positions on the central core. The inner tube (12) and core (14) form an annular flow channel (17) for the molten metal. Optionally, the inner tube is provided with a sleeve (18) of a non-magnetic material such as alumina, but preferably, the sleeve is made of a thermally treated mica. A plurality of laminated core elements (20) are provided comprising a multiplicity of sheet metal laminae (28) and an insulating sheet (26), of a thermally pretreated mica, positioned between each pair of metal laminae. The core elements (20) are positioned in a circumferentially spaced relationship around the inner tube (12) and sleeve (18). Each core element has a plurality of spaced leg portions (21) in which the spaces between each pair or leg portions is occupied by an electrically conductive coil (22) having a plurality of windings (32) which are insulated from each other by a thermally pretreated mica. In a preferred embodiment of the invention, each core element (20) has seven leg portions thus providing six spaces between the leg portions forming, in effect, six receptacles for six coils. An outer housing (24), enclosing the pump components, is sealed (not shown) to the ends of the inner tube (12).

In accordance with of the present invention, the core elements and coils of the pump employ a thermally pretreated mica which has been substantially freed of impurities. The impurities were found to be released when the mica was heated to a temperature above 700°C. Coils constructed of Invar® (a ferronickel alloy of 36% Ni; 64% steel, and 0.2% carbon, having a melting point of 1500°C and a density of 8.0), which are presently used in the art are preferably replaced with flat conductors of deoxygenated copper for the pump of the invention. Conventional carbon steel core rods employed in the prior art are preferably replaced with a cobalt/iron alloy. Further, in the case of pumping molten magnesium or magnesium alloys, the external housing components which are in contact with the molten metal are made of 347 stainless steel (a niobium-stabilized nickel alloy) or 430 stainless steel (a chromium/molybdinum containing steel).

It was discovered that conventional electrical grade mica, when subjected to the high temperatures encountered in pumping molten magnesium, released impurities of unknown identification. Conventional mica sheets produced for electrical insulation and which have not been treated as hereinafter described released impurities in the form of a black soot beginning at temperatures above about 400°C. The residue of such impurities were found to be the primary cause of a shorting-out of the coil windings and/or laminated cores.

It has now been found that if conventional commercially available mica, for example in sheet form, the usual form of mica employed to insulate transformer laminations as well as other electrical appliances is heated to a temperature above 700°C and preferably above 850°C under an oxidizing atmosphere, e.g. air, for a period of time sufficient to eliminate impurities from the mica the thermally pretreated mica will withstand high temperatures (above 700°C) when subquently placed into use without producing a shorting-out in the laminated cores and/or coil windings. Preferably, the pretreatment time varies from 1 to 24 hours depending on the temperature to which the mica is subjected. Generally, the higher the pretreatment temperature, the shorter the period of time needed to eliminate impurities from the mica. More preferably, the pretreatment time is in excess of about 8 hours. Conventional mica used as a core laminate and coil insulation even when padded with argon and immersed into molten magnesium produced a black soot on the mica surfaces, whereas mica when pretreated in accordance with the present invention and similarly employed in an argon padded atmosphere showed no visible evidence of such soot formation. In every instance where untreated mica was employed as the insulation in a pump used for the conveyance of molten magnesium shorting-out of the coils or liminated stator cores occurred. In many instances shorting-out occurred on pre-use tests and/or shortly after immersion of the pump into the molten metal.

Accordingly, the present invention resides in the discovery that conventional commercially produced amber mica, as well as mica from other sources, can be treated by heating in an oxidizing atmosphere to remove impurities to yield an electrical insulating material which exhibits superior performance in high temperature applications. The amber mica when treated at a temperature above 700°C, preferably above 850°C, can be used for extended periods of time in, for example, electromagnetic pumps for pumping molten metal without cooling as is conventionally done in such pumps. The use of a thermally pretreated mica also permits the design of a more compact pump and longer in-service life in applications where the pump is submerged in the molten metal. The discovery has extensive utility for other electrical equipment which is subjected to high temperatures and where external cooling is not possible or advantageous.

With respect to the replacement of the components of present day pumps with, for example, cobalt/iron alloy elements, the choice is made because the Curie point is not exceeded at operating temperatures in the range of up to 815°C. Further, the replacement of the 430 stainless steel with niobium stabilized nickel steel (347 stainless steel) provides for higher temperature strength characteristics so that the interior of the pump can be padded with an inert gas, such as argon or helium, during construction and sealed.

It is also to be understood that if an external source of the padding gas is permissible in the operating environment, then either material (430 or 347 SS) can be employed but with a positive pad gas pressure being applied eliminating the necessity for the stronger metals to withstand the pressure built up by the sealed gas on heating of the pump to the temperature of the molten metal.

A trial was conducted with a conventional twelve-coil pump, manufactured by MHD Pump and Generators or Richland, Washington. The pump was introduced into an electrolytic production cell containing molten magnesium. In order to accommodate the twelve coil pump it had to be laid on its side with an outlet pipe having a right angle elbow installed. The pump failed almost immediately upon being placed in service. Upon disassembling of the pump it was found to have a soot deposited on the internal components. The stator windings were removed and the stator core laminate disassembled. All surfaces were cleaned of visible soot deposits. The elements were reassembled using amber mica supplied by Midwest Mica & Insulation Company under code designation 11-08-01. The amber mica strips were used to separate the core laminates and coil windings. On operation of the reassembled pump under heat stress test conditions, a short circuit occurred. The pump was opened and a visual inspection showed that the sooty deposits had reappeared. The stator core laminate and coil windings were again cleaned and reassembled this time with amber mica 11-08-01 which had been heated to a temperature of about 850°C in an oxidizing atmosphere (air) for 16 hours. The reassembled pump passed the heat stress test and was placed into a bath of molten magnesium. The pump failed in time due to the fact that the copper leads become embrittled, presumably due to hydrogen embrittlement. The copper leads were replaced with nickel leads and the coils were replaced with deoxygenated copper (CDA 102). The central core in the inner tube was also replaced with a cobalt-steel alloy rod and the thermally pretreated mica utilized throughout. The pump operated several times longer than the pump as originally purchased from the manufacturer when subjected to the same service. The pump eventually failed only because of the fracture of the housing seam on preheating of the pump housing prior to placement of the pump into service.

A second commercially obtained pump failed on preheat electrical continuity test before being placed in service. Two holes were drilled into the housing and air swept through the housing while the pump was heated to a temperature of about 500°C for about 16 hours. Testing showed the insulation was improved to the point where no electrical leakage was observed on electrical heat stress test and the pump was resealed and placed in service. The pump failed due to fracture of a power lead insulator. The pump was reworked as described in the preceding example, using the thermally pretreated mica, cobalt alloy core, and deoxygenated copper coil winding. The pump operated satisfactorily for several days but finally failed when the coils broke and short-circuited due to operator error during preheat and prior to use.

It is to be understood, of course, that the pump can be operated at a power supply voltage lower than 60 hertz. It is also to be understood that variable frequency controls can be used to obtain the lower frequencies in existing pumps and (or used in conjunction with the power supply control rheostats) to control capacity of teh existing pump.

**Claims**

1. Insulating material suitable for use as high temperature electrical insulation, wherein said insulating material is mica which has been heated to a temperature above 700°C in the presence of an oxidizing gas for a period of time sufficient to remove impurities from the mica and until the mica is substantially free of visible soot formation when heated to a temperature of above 500°C in an argon atmosphere.

2. The insulating material of Claim 1, comprising a sheet of mica, selected from naturally occurring mica or synthetic mica.

3. An electrical apparatus suitable for use at a temperature between about 0°C and the Curie temperature of magnetizable components of the apparatus characterized by incorporating the mica of Claim 1 or 2 as the sole electrical insulation into the components without external cooling of the components.

4. A method for preparing mica suitable for use as an electrical insulating material in electrical components capable of operating at a temperature above 700°C to the Curie temperature of the components comprising the step of thermally pretreating the mica to a temperature above 700°C in an oxidizing atmosphere and for a period of time sufficient until no discernable soot is formed upon heating of the electrical components to a temperature above 500°C in an atmosphere of argon.

5. The method of Claim 4, wherein the mica is thermally pretreated at a temperature of 850°C for a period of from 1 to 24 hours, and wherein no discernable soot is formed when the mica is used in said electrical components, and said components are heated by an immersion of the component into a molten metal at a temperature above 700°C.

6. An electromagnetic pump for use in conveying a molten metal having inducible electromagnetic properties, comprising a non-magnetizable tubular member, a magnetizable core member within said tubular member, a plurality of electromagnetic stator core elements arranged about an external surface of said tubular member in a circumferentially spaced relationship to each other, each stator core element having a plurality of spaced leg portions, a coil positioned in the space between each pair of leg portions, each stator core element comprising a multiplicity of sheet metal laminates separated one from the other by the thermally pretreated mica of Claim 1 or 2, and wherein said coil is made of a deoxygenated copper which is insulated between windings with said thermally pretreated mica of Claim 1 or 2, and a housing enclosing said stator core elements and coils and sealed to said tubular member.

7. The pump of Claim 5, wherein the sheet metal laminates of the stator core element and said core member are made of a cobalt/iron, and wherein said core member is made of a cobalt alloy.

8. The pump of Claim 6 or 7, including a three phase electrical current carrying wire sealably extending through said housing and electrically connected to said coils, and wherein said coils and electromagnetic stator core elements consist of six coils alternately connected to the three phases of said wires.

9. An electromagnetic pump for use in conveying a molten metal having inducible electromagnetic properties, said pump comprising a housing containing an inner tubular member of a non-magnetizable material, a core member centrally positioned in said inner tubular member in a spaced relationship to an inner surface of said tubular member to form an annular passageway for the molten metal, a plurality of electromagnetic stator core members positioned in a circumferentially spaced relationship about the external surface of the inner tubular member, each core member having a plurality of spaced leg portions in which the spaces between each pair of leg portion is occupied by an electrically conductive coil having a plurality of windings, said housing enclosing said core members and coils and being sealed to terminally extending ends of the inner tubular member, wherein the core members are constructed of a multiplicity of sheet metal laminates separated from each other by an insulating sheet material, said insulating material comprising the mica of claim 1 or 2, and wherein the windings of each coil and the sheet metal laminates of each core element are separated from each other by said thermally pre-treated mica.

**Revendications**

1. Matière isolante appropriée à une utilisation comme isolant électrique à haute température dans laquelle ladite matière isolante est du mica qui a été chauffé à une température supérieure à 700°C en présence d'un gaz oxydant pendant un laps de temps suffisant pour enlever les impuretés du mica et jusqu'à ce que le mica soit sensiblement exempt de formation visible de suie lorsqu'il est chauffé à une température supérieure à 500° C dans une atmosphère d'argon.

2. La matière isolante selon la revendication 1, comprenant une feuille de mica choisi parmi un mica de formation naturelle ou un mica synthétique.

3. Un appareil électrique apte à être utilisé à une température comprise entre environ 0° C et la température de Curie de composants magnétisables de l'appareil caractérisé en ce qu'il incorpore le mica selon la revendication 1 ou 2 en tant que seul isolant électrique dans les composants sans refroidissement extérieur des composants.

4. Un procédé de préparation d'un mica apte à être utilisé comme matière électrique isolante dans des composants électriques susceptibles de fonctionner à une température supérieure à 700° C jusqu'à la température de Curie des composants comprenant l'étape consistant à traiter thermiquement au préalable le mica à une température supérieure à 700° C dans une atmosphère oxydante et pendant un laps de temps suffisant pour qu'aucune suie discernable ne soit formée lorsque les composants électriques sont chauffés à une température supérieure à 500° c dans une atmosphère d'argon.

5. Le procédé selon la revendication 4, dans lequel le mica est traité thermiquement au préalable à une température de 850° C pendant une période de 1 à 24 heures, et dans lequel aucune suie discernable n'est formée lorsque le mica est utilisé dans lesdits composants électriques, et lesdits composants électriques sont chauffés par une immersion du composant dans un métal fondu à une température supérieure à 700° C.

6. Une pompe électromagnétique à utiliser pour transporter un métal fondu possédant des propriétés électromagnétiques qui peuvent être induites, comprenant un élément tubulaire non magnétisable, un élément de noyau magnétisable à l'intérieur dudit élément tubulaire, plusieurs éléments électromagnétiques de noyau de stator disposés autour d'une surface extérieure dudit élément tubulaire en étant espacés entre eux sur la circonférence, chaque élément de noyau de stator comprenant plusieurs parties formant pattes espacées, une bobine positionnée dans l'espace entre chaque paire de parties formant pattes, chaque élément de noyau de stator comprenant une multiplicité de laminés en tôle métallique séparés l'un de l'autre par le mica traité thermiquement au préalable selon la revendication 1 ou 2, et dans lequel ladite bobine est en cuivre désoxygéné qui est isolé, entre ses enroulements, à l'aide dudit mica traité thermiquement au préalable selon la revendication 1 ou 2, et un carter enfermant lesdits éléments de noyau de stator et les bobines et fermé de façon étanche sur ledit élément tubulaire.

7. La pompe selon la revendication 6, dans laquelle les laminés en tôle métallique de l'élément de noyau de stator et ledit élément de noyau sont en fer/cobalt, et dans lequel ledit élément de noyau est en un alliage de cobalt.

8. La pompe selon la revendication 6 ou 7, comprenant un câble transportant un courant électrique triphasé s'étendant de façon étanche à travers ledit carter et relié électriquement auxdites bobines, et dans laquelle lesdites bobines et lesdits éléments électromagnétiques de noyau de stator consistent en six bobines reliées en alternance aux trois phases desdits câbles.

9. Une pompe électromagnétique à utiliser pour transporter un métal fondu possédant des propriétés électromagnétiques qui peuvent être induites, ladite pompe comprenant un carter contenant un élément tubulaire intérieur en matière non magnétisable, un élément de noyau positionné de façon centrale dans ledit élément tubulaire intérieur, dans une relation espacée vis-à-vis d'une surface intérieure dudit élément tubulaire pour former un passage annulaire pour le métal fondu, plusieurs éléments électromagnétiques de noyau de stator positionnés dans une relation espacée sur la circonférence autour de la surface externe dudit élément tubulaire intérieur, chaque élément de noyau comportant plusieurs parties formant pattes espacées, les espaces entre des paires de parties formant pattes étant occupés par une bobine électriquement conductrice comportant plusieurs enroulements, ledit carter enfermant lesdits éléments de noyau et lesdites bobines et étant assemblé de façon étanche sur des extrémités de l'élément tubulaire intérieur s'étendant en bout, les éléments de noyau étant formés d'une multiplicité de laminés de tôle métallique séparés l'un de l'autre par une matière de feuille isolante, ladite matière isolante comprenant le mica selon la revendication 1 ou 2 et les enroulements de chaque bobine et les laminés de tôle métallique de chaque élément de noyau étant séparés les uns des autres par ledit mica traité thermiquement au préalable.

**Patentansprüche**

1. Isoliermaterial, das zur Verwendung als elektrische Hochtemperaturisolierung geeignet ist, worin das Isoliermaterial Glimmer ist, der auf eine Temperatur oberhalb 700°C in Gegenwart eines oxidierenden Gases für eine ausreichende Zeitdauer erhitzt worden ist, um Verunreinigungen aus dem Glimmer zu entfernen und bis der Glimmer im wesentlichen frei von sichtbarer Rußbildung ist, wenn er in einer Argon-Atmosphäre auf eine Temperatur oberhalb 500°C erhitzt wird.

2. Isoliermaterial nach Anspruch 1, das eine Platte Glimmer enthält, ausgewählt aus natürlich vorkommendem oder synthetischem Glimmer.

3. Elektrische Vorrichtung, die zur Verwendung bei einer Temperatur zwischen etwa 0°C und der Curie-Temperatur von magnetisierbaren Komponenten der Vorrichtung geeignet ist, dadurch gekennzeichnet, daß der Glimmer nach Anspruch 1 oder 2 als einzige elektrische Isolierung in die Komponenten eingebaut ist, ohne daß die Komponenten von außen gekühlt werden.

4. Verfahren zur Herstellung von Glimmer, der zur Verwendung als elektrisches Isoliermaterial in elektrischen Komponenten geeignet ist, die bei einer Temperatur oberhalb 700°C bis zur Curie-Temperatur der Komponenten betrieben werden können, umfassend den Schritt der thermischen Vorbehandlung des Glimmers auf eine Temperatur oberhalb 700°C in einer oxidierenden Atmosphäre und für eine ausreichende Zeitdauer, bis keine erkennbare Rußbildung bei Erhitzen der elektrischen Komponenten auf eine Temperatur oberhalb 500°C in einer Argon-Atmosphäre auftritt.

5. Verfahren nach Anspruch 4, worin der Glimmer für eine Dauer von 1 bis 24 Stunden bei einer Temperatur von 850°C thermisch vorbehandelt wird und worin keine erkennbare Rußbildung auftritt, wenn der Glimmer in den elektrischen Komponenten verwendet wird und die Komponenten durch ein Eintauchen der Komponente in ein geschmolzenes Metall bei einer Temperatur oberhalb 700°C erhitzt werden.

6. Elektromagnetische Pumpe zur Verwendung beim Transport eines geschmolzenen Metalls mit induzierbaren elektromagnetischen Eigenschaften, umfassend ein nicht-magnetisierbares rohrförmiges Teil, ein magnetisierbares Kernteil innerhalb des rohrförmigen Teils, eine Vielzahl von elektromagnetischen Stator-Kernelementen, die um den Umfang der äußeren Oberfläche des rohrförmigen Teils in Abständen voneinander angeordnet sind, wobei jedes Stator-Kernelement eine Vielzahl von in Abständen angeordneten Fußabschnitten hat, eine Spule, die sich im Raum zwischen jedem Paar von Fußabschnitten befindet, wobei jedes Stator-Kernelement eine Vielzahl von Metallblechlaminaten enthält, die voneinander durch den thermisch vorbehandelten Glimmer nach Anspruch 1 oder 2 getrennt sind, und worin die Spule aus desoxidiertem Kupfer hergestellt ist, das zwischen Windungen mit dem thermisch vorbehandelten Glimmer nach Anspruch 1 oder 2 isoliert ist, und ein Gehäuse, welches die Stator-Kernelemente und Spulen umschließt und zum rohrförmigen Teil abgedichtet ist.

7. Pumpe nach Anspruch 5, worin die Metallblechlaminate des Stator-Kernelements und des Kernteils aus Kobalt/Eisen hergestellt sind und worin das Kernteil aus einer Kobaltlegierung hergestellt ist.

8. Pumpe nach Anspruch 6 oder 7, die ein dreiphasiges Trägerkabel für elektrischen Strom enthält, das sich abdichtbar durch das Gehäuse erstreckt und mit den Spulen elektrisch verbunden ist und worin die Spulen und die elektromagnetischen Stator-Kernelemente aus sechs Spulen bestehen, die alternierend mit den drei Phasen der Kabel verbunden sind.

9. Elektromagnetische Pumpe zur Verwendung beim Transport eines geschmolzenen Metalls mit induzierbaren elektromagnetischen Eigenschaften, wobei die Pumpe ein Gehäuse enthält, umfassend ein inneres rohrförmiges Teil aus einem nicht-magnetisierbaren Material, ein Kernteil, das zentral in dem inneren rohrförmigen Teil im Abstand zu einer inneren Oberfläche des rohrförmigen Teils angeordnet ist, um einen ringförmigen Leitungsweg für das geschmolzene Metall zu bilden, eine Vielzahl von elektromagnetischen Stator-Kernteilen, die um den Umfang der äußere Oberfläche des inneren rohrförmigen Teils in Abständen voneinander angeordnet sind, wobei jedes Stator-Kernteil eine Vielzahl von in Abständen angeordneten Fußabschnitten hat, in denen die Räume zwischen jedem Paar von Fußabschnitten durch eine elektrisch leitfähige Spule mit einer Vielzahl von Windungen besetzt sind, wobei das Gehäuse die Kernteile und Spulen umschließt und zu Endbegrenzungen des inneren rohrförmigen Teils abgedichtet ist, wobei die Kernteile aus einer Vielzahl von Metallblechlaminaten hergestellt sind, die voneinander durch ein plattenförmiges Isoliermaterial getrennt sind, wobei das Isoliermaterial den Glimmer nach Anspruch 1 oder 2 enthält und worin die Windungen jeder Spule und die Metallblechlaminate jedes Kernelements voneinander durch thermisch vorbehandelten Glimmer getrennt sind.